(19) Europäisches Patentamt
European Patent Office
Office européen des brevets

(11) **EP 2 255 931 B2**

(12) **NEUE EUROPÄISCHE PATENTSCHRIFT**
Nach dem Einspruchsverfahren

(45) Veröffentlichungstag und Bekanntmachung des Hinweises auf die Entscheidung über den Einspruch:
**23.12.2020 Patentblatt 2020/52**

(45) Hinweis auf die Patenterteilung:
**07.03.2018 Patentblatt 2018/10**

(21) Anmeldenummer: **10005239.8**

(22) Anmeldetag: **19.05.2010**

(51) Int Cl.:
**B25J 9/16** *(2006.01)* **G05B 19/4103** *(2006.01)*

(54) **Verfahren und Vorrichtung zur Steuerung eines Manipulators**

Method and device for controlling a manipulator

Procédé et dispositif de commande d'un manipulateur

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **29.05.2009 DE 102009023307**

(43) Veröffentlichungstag der Anmeldung:
**01.12.2010 Patentblatt 2010/48**

(73) Patentinhaber: **KUKA Deutschland GmbH**
**86165 Augsburg (DE)**

(72) Erfinder:
• **Weiß, Martin, Dr.**
**86459 Margertshausen (DE)**

• **Sonner, Christian**
**80797 München (DE)**

(74) Vertreter: **Schlotter, Alexander Carolus Paul et al**
**Wallinger Ricker Schlotter Tostmann**
**Patent- und Rechtsanwälte Partnerschaft mbB**
**Zweibrückenstrasse 5-7**
**80331 München (DE)**

(56) Entgegenhaltungen:
EP-A1- 0 706 103        DE-A1- 19 618 332
DE-A1- 19 811 049        US-A- 4 773 025
US-A- 5 726 896

EP 2 255 931 B2

**Beschreibung**

Die vorliegende Erfindung betrifft ein Verfahren und eine Vorrichtung zur Steuerung eines Manipulators, insbesondere eines Roboters, wobei eine geplanten Bahn des Manipulators durch eine Bahngenerierungseinrichtung vorgeben, eine Steuerbahn auf Basis der geplanten Bahn durch eine Bahnkonvertierungseinrichtung automatisch bestimmt und die Steuerbahn mit dem Manipulator durch eine Manipulatorsteuerung abgefahren wird.

Bewegungen von Manipulatoren, beispielsweise Robotern, werden bisher in der Regel durch eine Sequenz von Posen vorgegeben. Hierzu werden die einzelnen Posen beispielsweise angefahren und dadurch "geteacht", oder offline in einem Computerprogramm durch Koordinaten für ein Referenzkoordinatensystem wie den Tool Center Point (TCP) oder durch die Bewegungsachsen definiert. Der Manipulator fährt die Posen dann nacheinander an.

Hierzu interpoliert seine Manipulatorsteuerung eine Steuerbahn zwischen den Posen, beispielsweise linear oder durch Kreissegmente. Um glatte Steuerbahnen zu generieren, ist es neben einer überschleifenden Linear- oder Zirkulärinterpolation auch bekannt, aufeinanderfolgende Posen durch Splines zu interpolieren, i.e. Funktionen, die zwischen Stützpunkten stückweise definiert sind.

Die EP 1 117 020 B1 schlägt vor, Stützpunkte nur dann durch Spline-Abschnitte zu interpolieren, wenn an dem Stützpunkt keine scharfe Ecke vorgesehen ist. Aus der US 2007/0030271 A1 ist es bekannt, dass eine Robotersteuerung die Splines unter Berücksichtigung der Länge und Winkel der Tangentenvektoren an den Stützpunkten bestimmt, um geschlossene Schleifen zu vermeiden. Mit demselben Ziel schlägt die US 7,295,891 B2 vor, Lage, Orientierung und Zusatzachsen getrennt voneinander zu parametrisieren. Aus der DE 10 2006 022 483 A1 ist eine Anzeige der Bahntangente in einem Stützpunkt sowie eines hierzu senkrechten Richtungspfeils bekannt. Durch Verschieben des Stützpunktes längs der Bahntangente oder des Richtungspfeils kann der Stützpunkt verschoben werden. Die EP 0 312 544 B1 lehrt ein Verfahren zur effizienteren Berechnung von Zwischenwerten von Splines für die einzelnen Achsen eines Roboterarms.

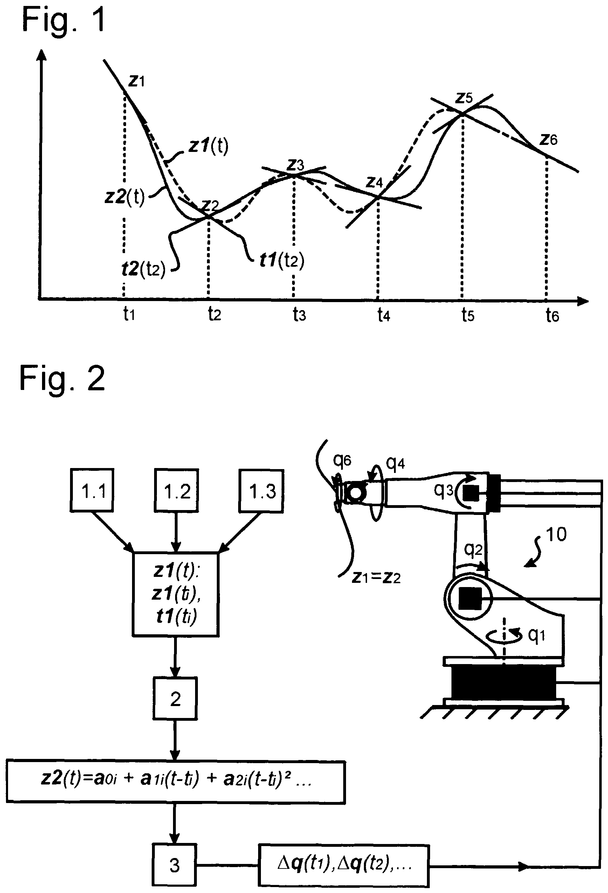

Beispielsweise, wenn ein CAD-Modell eines von einem Roboter zu bearbeitenden Bauteils vorliegt, kann die gewünschte kartesische Bahn an Stelle diskreter Posen bereits in funktioneller Form, insbesondere als Spline oder Bezier-Kurve generiert werden. Heutige Manipulatorsteuerungen gestatten es jedoch nicht, solche geplanten Bahnen direkt als Steuerbahnen zu verwenden. Stattdessen werden die geplanten Bahnen zunächst in Stützpunkte diskretisiert und der Manipulatorsteuerung als Soll-Posen vorgegeben, die diese dann ihrerseits zu einer Steuerbahn interpoliert und abfährt. Selbst, wenn die Manipulatorsteuerung die Soll-Posen durch Splines interpoliert, ist nicht gewährleistet, dass damit wieder die ursprünglich als Spline generierte Bahn erzeugt wird. Denn wie Fig. 1 zeigt, in der Stützpunkte $z_1,..., z_6$ durch zwei verschiedene Splines $z1(t)$, $z2(t)$ interpoliert sind, die an den Stützpunkten dieselben Werte und ersten Ableitungen, dargestellt durch Tangenten $t1(t)$, $t2(t)$, aufweisen, stehen je nach Grad der Splines noch Freiheitsgrade für die Interpolation zur Verfügung. Generiert somit beispielsweise ein CAD-Werkzeug die geplante Bahn $z1(t)$, die dann in Stützpunkten $z_1,..., z_6$ diskretisiert wird, kann die Manipulatorsteuerung diese unerwünschterweise durch die von der geplanten Bahn $z1(t)$ abweichende Steuerbahn $z2(t)$ interpolieren und abfahren.

Die DE 196 18 332 A1 betrifft eine numerische Steuervorrichtung mit Spline-Interpolationsfunktion. Ein Ziel ist es, eine Interpolation einer Bahn entsprechend einer Spline-Kurve in Echtzeit durchführen zu können. Der Spline stellt dann eine Bahn dar, welche von einem Werkzeug abgefahren werden kann. Dabei wird die Gesamtbahn in Abschnitte unterteilt, welche einzeln mit einem Spline interpoliert werden.

Die US 5,726,896 betrifft ein Verfahren und ein System zur Spline-Interpolation und eine Nutzung dieses Verfahrens in einer CNC-Maschine. Ziel ist es, ein Verfahren bereitzustellen, mit dem allgemeine Spline-Kurven verschiedenster Ordnung zur Interpolation für die Bahn einer numerisch gesteuerten Maschine zu verwenden. Diese Maschine soll insbesondere eine Schneidmaschine sein. Dazu wird vorgeschlagen, auf Basis eines Oberflächenmodells, ein Post-Processing durchzuführen, so dass das Oberflächenmodell in Bewegungsabschnitte umgewandelt wird, welche durch NURBS oder Bezier-Kurven modelliert sind. Diese modellieren Bewegungsabschnitte werden dann in die CNC-Maschine übertragen.

Aufgabe der vorliegenden Erfindung ist es, ein verbessertes Verfahren zur Steuerung eines Manipulators anzugeben.

Diese Aufgabe wird durch ein Verfahren mit den Merkmalen des Anspruchs 1 gelöst. Anspruch 7 stellt eine Vorrichtung, Anspruch 8 bzw. 9 ein Computerprogramm bzw. ein Computerprogrammprodukt, insbesondere ein Speichermedium oder einen Datenträger, zur Durchführung eines Verfahrens nach Anspruch 1 unter Schutz. Die Unteransprüche betreffen vorteilhafte Weiterbildungen.

Die vorliegende Erfindung basiert auf der Idee, zusätzlich Krümmungsinformationen der geplanten Bahn bei der Bestimmung von Krümmungsinformationen der Steuerbahn zu berücksichtigen. Während bisher, wie einleitend mit Bezug auf Fig. 1 beschrieben, bei der Bestimmung der Steuerbahn $z2(t)$ die geplante Bahn $z1(t)$ in Stützpunkten $z_1,..., z_6$ diskretisiert wurde, die dann interpoliert wurden, ohne Krümmungsinformationen zu berücksichtigen, und der Verlauf der Steuerbahn $z2(t)$ zwischen den Stützpunkten $z_1,..., z_6$ teilweise erheblich von der geplanten Bahn $z1(t)$ abweichen konnte, ermöglicht die vorliegende Erfindung ein genaueres Abfahren vorab geplanter Bahnen.

Hierzu wird zunächst durch eine Bahngenerierungseinrichtung eine geplante Bahn des Manipulators vorgegeben. Eine Bahngenerierungseinrichtung umfasst ein CAD ("Computer Aided Design")-Werkzeug, und/oder einen Bahnoptimierer in einer Ausführung zusätzlich eine, insbesondere graphische, Eingabeeinrichtung zur Vorgabe von Stützpunkten der Bahn, Tangenten an die Bahn oder dergleichen.

Als kartesische Bahn wird vorliegend insbesondere eine parametrisierte Funktion bezeichnet, deren Funktionswerte Lagen und/oder Orientierungen eines Referenzsystems des Manipulators, beispielsweise des TCPs, angeben. Wird beispielsweise die Lage des TCPs oder eines anderen Referenzkoordinatenursprunges des Manipulators durch die drei Koordinaten (x, y, z), die den Abstand zu einem Basiskoordinatensystem in diesem Basiskoordinatensystem beschreiben, seine Orientierung durch Quaternionen $q_0 + i{\times}q_1 + j{\times}q_2 + k{\times}q_3$, die drei EULER- oder drei KARDAN-Winkel $(\alpha, \beta, \gamma)$ des Referenzkoordinaten- gegenüber dem Basiskoordinatensystem beschrieben, so kann die kartesische Bahn mit dem Bahnparameter t, der insbesondere die Fahrzeit darstellen kann, parametrisiert sein:

$$z(t) = \left[x(t), y(t), z(t), \alpha(t), \beta(t), \gamma(t)\right]^{T} . \qquad (1)$$

Diese Funktion kann beispielsweise eine stückweise, insbesondere zwischen Stützpunkten $z_1 = z(t_1)$, $z_2 = z(t_2)$,... definierte Funktion, insbesondere eine Polynomfunktion vom Grad $g$,

$$z(t) = \sum_{j=0}^{g} a_{ij} \left(t - t_i\right)^{j} \Leftrightarrow t \in \left[t_i, t_{i+1}\right] \qquad (2)$$

ein sogenannter Spline sein. Splines mit $g = 3$ werden als kubische Splines, Splines mit $g > 3$ entsprechend als höhergradige Splines bezeichnet. Die geplante und/oder Steuerbahn kann auch als B-Spline vorgegeben bzw. bestimmt werden, wie sie beispielsweise in Carl de Boor, A practical guide to splines, Springer Verlag, 1978 beschrieben sind. Diese weisen den Vorteil auf, dass Änderungen der Koeffizienten sich nur lokal, also nicht zwischen allen Stützpunkten auswirken.

Auf Basis der geplanten Bahn bestimmt eine Bahnkonvertierungseinrichtung automatisch einer Steuerbahn, die dann in an sich bekannter Weise durch eine Manipulatorsteuerung mit dem Manipulator abgefahren wird, beispielsweise, indem die Manipulatorsteuerung die Steuerbahn abtastet und die abgetasteten Punkte unter Berücksichtigung eines vorgegebenen Geschwindigkeits- oder Beschleunigungsprofils, etwa eines Geschwindigkeitstrapezprofils, anfährt.

Während dabei bislang die geplante Bahn in Stützpunkte aufgelöst und nur diese durch die Steuerbahn interpoliert wurden, werden erfindungsgemäß Krümmungsinformationen der Steuerbahn auf Basis von Krümmungsinformationen der geplanten Bahn bestimmt.

Krümmungsinformationen im Sinne der vorliegenden Erfindung umfassen erste und/oder höhere Ableitungen der geplanten und/oder der Steuerbahn nach einem Bahnparameter. Ist eine kartesische Bahn in Form einer parametrisierten Funktion gegeben, können erste und/oder höhere Ableitungen der Steuerbahn nach einem Bahnparameter $t2$

$$\frac{dz2(t2)}{dt2}, \frac{d^{2}z2(t2)}{dt2^{2}},\dots \quad (3)$$

auf Basis der erste und/oder höhere Ableitungen der geplanten Bahn nach einem Bahnparameter $t1$

$$\frac{dz1(t1)}{dt1}, \frac{d^{2}z1(t1)}{dt1^{2}},\dots \quad (4)$$

bestimmt werden, wobei $t1$ und $t2$ identisch sein können.

Krümmungsinformationen im Sinne der vorliegenden Erfindung umfassen Tangentenrichtungen und/oder -änderungen der Bahn. Beschreibt

$$t(t_i) = \frac{dz(t)}{dt}\bigg|_{t=t_i} \qquad (5)$$

einen Tangentenvektor im Stützpunkt $z_i = z(t_i)$ und

$$\frac{dt(t)}{dt}, \frac{d^2t(t)}{dt^2}, \dots \qquad (6)$$

oder der Normalen- und Binormalenvektor, dessen Änderungen, so können Tangentenrichtungen und/oder -änderungen der Steuerbahn auf Basis der Tangentenrichtungen und/oder -änderungen der geplanten Bahn bestimmt werden.

Eine Tangentenrichtung und/oder -änderung einer Bahn ist in einem lokalen Koordinatensystem eines Stützpunktes $z_i$ der Bahn definiert.

Gleichermaßen können Krümmungsinformationen im Sinne der vorliegenden Erfindung Polynomkoeffizienten, insbesondere Polynomkoeffizienten erster oder höherer Ordnung umfassen. Einsetzen von (2) in (3) bis (6) zeigt, dass insbesondere Ableitungen und Tangenten(änderungen) äquivalent auch durch Polynome, beispielsweise die Polynomkoeffizienten $a_{ij}$ eines Splines beschrieben werden können.

Eine Bahn kann gleichermaßen als Bezier-Kurve vorgegeben bzw. bestimmt werden. Dann können die Krümmungsinformationen deren sogenannte Kontrollpunkte umfassen.

In einer bevorzugten Ausführung bestimmt die Bahnkonvertierungseinrichtung Krümmungsinformationen der Steuerbahn auf Basis von Krümmungsinformationen der geplanten Bahn wahlweise bzw. optional, wobei vorzugsweise abschnittsweise, insbesondere zwischen Stützpunkten, zwischen einer Bestimmung unter Berücksichtigung von Krümmungsinformationen der geplanten Bahn und einer Bestimmung ausschließlich auf Basis der Stützpunkte, beispielsweise einer Linear- oder Zirkulärinterpolation oder einer Interpolation mit beliebigen Splines gewählt werden kann. Auf diese Weise kann, insbesondere abschnittsweise, ein genaues Abfahren der geplanten Bahn erzwungen werden, wo dies erforderlich ist, während in den anderen Abschnitten herkömmliche, schnelle Werkzeuge zur Generierung der Steuerbahn genutzt werden können.

Erfindungsgemäß ist vorgesehen, dass die Steuerbahn unter Vorgabe einer maximalen Abweichung gegenüber der geplanten Bahn approximiert wird, und dass kann eine Stützpunktanzahl der Steuerbahn gegenüber einer Stützpunktanzahl der geplanten Bahn reduziert wird. Da eine Steuerbahn mit weniger Stützpunkten bei Einsatz derselben Interpolationsmethode die geplante Bahn in der Regel nicht exakt nachbilden kann, kann zur Stützpunktreduzierung eine Abweichung bis zu einer vorgegebenen maximalen Abweichung zugelassen werden.

In einer bevorzugten Ausführung wird einer bereits geplanten Bahn oder einer Steuerbahn wenigstens ein Stützpunkt zwischen zwei vorhandenen Stützpunkten hinzugefügt, ohne dass die Steuerbahn wesentlich verändert wird. Werden beispielsweise B-Splines verwendet, wirken sich solche Änderungen nur lokal aus. Solche nachträglich zu einer bereits geplanten oder Steuerbahn hinzugefügte Stützpunkte können beispielsweise Schaltpunkte, etwa zur Aktivierung oder Deaktivierung eines Werkzeugs, sein. Indem die Krümmungsinformationen berücksichtigt und so eine Abweichung zwischen geplanter und Steuerbahn verhindert wird, führt auch die nachträgliche Einfügung zusätzlicher Stützpunkte nicht zu einer Abweichung zwischen geplanter und Steuerbahn.

Eine geplante Bahn und/oder eine Steuerbahn kann, wie vorstehend ausgeführt, Lagen und/oder Orientierungen eines Referenzsystems des Manipulators, etwa des TCPs, angeben. Dabei können Lage und Orientierung beispielsweise getrennt jeweils in Form eines Splines oder einer anderen Kurvenbeschreibung angegeben werden, zum Beispiel in Form eines dreidimensionalen Splines für die drei kartesischen Koordinaten x, y, z der Lage und eines weiteren dreidimensionalen Splines für die Quaterionen, vorzugsweise Einheitsquaterionen $q_0^2 + q_1^2 + q_2^2 + q_3^2 = 1$, die EULER-Winkel oder die KARDAN-Winkel der Orientierung. Gleichermaßen können Lage und Orientierung zum Beispiel zusammen in Form eines höherdimensionalen Splines angegeben werden, etwa eines Vektors aus drei Lage- und drei Orientierungskoordinaten, DENAVIT-HARTENBERG-Koordinaten oder dergleichen. Eine geplante Bahn und/oder eine Steuerbahn kann auch eine oder mehrere Zusatzachsen eines redundanten Manipulators umfassen. An Stelle kartesischer Lage- und Orientierungskoordinaten kann eine geplante Bahn und/oder eine Steuerbahn auch eine parametrisierte Funktion bezeichnet, deren Funktionswerte die Gelenkkoordinaten, insbesondere Gelenkwinkeln $q_i$, eines Manipulators angeben.

Weitere Vorteile und Merkmale ergeben sich aus den Unteransprüchen und den Ausführungsbeispielen. Hierzu zeigt, teilweise schematisiert:

Fig. 1:    ausschnittsweise eine geplante und eine Steuerbahn nach dem Stand der Technik; und

Fig. 2:    eine Vorrichtung zur Steuerung eines Roboters nach einer Ausführung der vorliegenden Erfindung.

Fig. 1 zeigt ausschnittsweise eine geplante Bahn $z1$(t), wie sie beispielsweise ein CAD-Werkzeug vorgibt. Nach dem Stand der Technik diskretisiert eine Bahnkonvertierungseinrichtung die beispielsweise als kubischer Spline gemäß (2) vorgegebene geplante Bahn $z1$(t) in Stützpunkten $z_1, \dots, z_6$. Diese interpoliert eine Manipulatorsteuerung zu einer Steuerbahn in Form eines ebenfalls kubischen Splines $z2$(t), der zwar dieselben Stützpunkte $z_1, \dots, z_6$ aufweist, sich jedoch, wie in Fig. 1 erkennbar, in der Form, i.e. dem Verlauf zwischen den Stützpunkten von der geplante Bahn $z1$(t) unterscheidet, da Krümmungsinformationen, insbesondere die Tangenten $t1(t_i)$ der geplante Bahn $z1(t)$ in den Stützpunkte $z_1,..., z_6$ nicht berücksichtigt wurden. Nachteilig fährt eine solche Manipulatorsteuerung nach dem Stand der Technik also nicht die geplante Bahn $z1(t)$, sondern die hiervon deutlich abweichende Steuerbahn $z2(t)$ ab.

Fig. 2 zeigt eine Vorrichtung bei der Durchführung eines Verfahrens zur Steuerung eines Roboters 10 nach einer Ausführung der vorliegenden Erfindung.

Eine Bahngenerierungseinrichtung in Form eines CAD-Werkzeugs 1.1 oder eines Bahnoptimierers 1.2 gibt eine geplante Bahn $z1(t)$ des TCPs des Roboters 10 vor, beispielsweise, wie in Fig. 2 angedeutet, durch Vorgabe von Stützpunkten $z1(t_i)$ und dortigen Tangenten $t1(t_i)$. In nicht dargestellten Abwandlungen kann die Bahngenerierungseinrichtung die geplante Bahn auch durch Vorgabe der Polynomkoeffizienten eines Splines oder der Kontrollpunkte einer Bezier-Kurve vorgeben.

Eine Bahnkonvertierungseinrichtung 2 bestimmt auf Basis dieser geplanten Bahn $z1(t)$ automatisch eine Steuerbahn $z2(t)$. Hierzu bestimmt sie nicht nur deren Stützpunkte $z2(t_i)$, sondern auch Krümmungsinformationen, beispielsweise, wie in Fig. 2 angedeutet, die Polynomkoeffizienten $a_{ij}$ eines Splines oder in nicht dargestellten Abwandlungen Tangenten $t2(t_i)$ in den Stützpunkten $z2(t_i)$ oder Kontrollpunkte einer Bezier-Kurve. Diese Krümmungsinformationen werden aus den Krümmungsinformationen der geplanten Bahn, beispielsweise den Tangenten $t1(t_i)$ in deren Stützpunkten $z1(t_i)$ ermittelt, die die Bahngenerierungseinrichtung zusammen mit den Stützpunkten $z1(t_i)$ exportiert. Die äquivalenten Darstellungen durch Stützpunkte und dortige Tangenten, als Spline oder als Bezier-Kurve können dabei ineinander überführt werden.

Erfindungsgemäß reduziert die Bahnkonvertierungseinrichtung 2 die Anzahl der Stützpunkte $z2(t_i)$ der Steuerbahn, um den Rechenaufwand zu verringern. Da eine solche Steuerbahn die geplante Bahn in der Regel nicht mehr exakt abbilden kann, wird in der Bahnkonvertierungseinrichtung 2 ein maximaler Abstand vorgegeben und die Steuerbahn so bestimmt, dass ihr Abstand zu der geplanten Bahn diesen maximalen Abstand nicht überschreitet. Dies kann auch dann durchgeführt werden, wenn die Darstellungen von geplanter und Steuerbahn ineinander nicht oder nur mit höherem Rechenaufwand möglich ist.

In einer weiteren nicht dargestellten Abwandlung wird vor der Bestimmung der Steuerbahn zwischen zwei Stützpunkten $z1(t_i)$, $z1(t_{i+1})$ der geplanten Bahn ein weiterer Punkt, beispielsweise ein Schaltpunkt zur Aktivierung eines Werkzeugs des Roboters 10, eingefügt. Zusätzlich oder alternativ kann auch der bereits bestimmten Steuerbahn zwischen zwei Stützpunkten $z2(t_i)$, $z2(t_{i+1})$ ein weiterer Punkt hinzugefügt werden. Da bei der Bestimmung der Steuerbahn auf Basis der geplanten Bahn auch Krümmungsinformationen berücksichtigt und so eine Abweichung zwischen geplanter und Steuerbahn begrenzt oder verhindert werden, führt die Einfügung eines oder mehrerer weiterer Punkte vorteilhaft nicht zu einer Veränderung der Steuerbahn.

In einer weiteren nicht dargestellten Abwandlung wird die Steuerbahn nur abschnittsweise, beispielsweise zwischen den Stützpunkten $z1(t_2)$ und $z1(t_5)$ der geplanten Bahn unter Berücksichtigung der Krümmungsinformationen bestimmt, in den Abschnitten $[t_1, t_2]$ und $[t_5, t_6]$ hingegen durch lineare Interpolation.

Eine Manipulatorsteuerung 3 fährt die Steuerbahn mit dem TCP des Roboters 10 ab, indem sie aus der Steuerbahn $z2(t)$ Soll-Inkremente $\Delta q$ der sechs Gelenkkoordinaten $q_1$ bis $q_6$ bestimmt und die Antriebe des Roboters 10 entsprechend ansteuert bzw. regelt. Diesbezüglich sei darauf hingewiesen, dass die geplante und die Steuerbahn kartesische Bahnen sind, die die Lage und Orientierung des TCPs des Roboters 10 im Raum beschreiben.

Die geplante Bahn und/oder die Steuerbahn kann beispielsweise auch in Form eines Computerprogramms vorgegeben oder editiert werden. Beispielsweise kann dies in der Form

LIN (x1, y1, z1, $\alpha$1, $\beta$1, $\gamma$1)
SPLINE (x2, y2, z2, $\alpha$2, $\beta$2, $\gamma$2), TANGENT1(x, y, z), TANGENT2($\Delta$x, $\Delta$y, $\Delta$z):

erfolgen, nach der Stützpunkt $z(t_1)$ linear angefahren wird, und von dort ein Spline durch den Stützpunkt $z(t_2)$ gelegt wird, der dort eine Tangente aufweist, die durch einen Geradenpunkt (x, y, z) und einen Richtungsvektor ($\Delta$x, $\Delta$y, $\Delta$z) vorgegeben ist.

Bezugszeichenliste

1.1     CAD-Werkzeug
1.2     Bahnoptimierer
1.3     graphische Eingabevorrichtung
2       Bahnkonvertierungseinrichtung
3       Manipulatorsteuerung
10      Roboter

$z$(t)        Bahn
$z1$(t)        geplante Bahn
$z2$(t)        Steuerbahn
$z$(t$_i$)        Stützpunkt
$t$(t$_i$)        Tangentenvektor


**Patentansprüche**

1.    Verfahren zur Steuerung eines Manipulators, insbesondere eines Roboters (10), mit den Schritten:

Vorgeben einer geplanten Bahn ($z1$(t)) des Manipulators durch eine Bahngenerierungseinrichtung (1.1, 1.2, 1.3);
automatisches Bestimmen einer Steuerbahn ($z2$(t)) auf Basis der geplanten Bahn durch eine Bahnkonvertierungseinrichtung (2); und
Abfahren der Steuerbahn mit dem Manipulator durch eine Manipulatorsteuerung (3) **dadurch gekennzeichnet, dass**
die Bahnkonvertierungseinrichtung (2) Krümmungsinformationen ($a_{ij}$; $t2$(t$_i$)) der Steuerbahn auf Basis von Krümmungsinformationen ($a_{ij}$; $t1$(t$_i$)) der geplanten Bahn bestimmt, wobei Krümmungsinformationen erste und/oder höhere Ableitungen $\left(\dfrac{dz(t)}{dt}, \dfrac{d^2z(t)}{dt^2}, \ldots\right)$ der Bahn nach einem Bahnparameter (t) umfassen, wobei die geplante Bahn und/oder die Steuerbahn Lagen und/oder Orientierungen des TCPs des Manipulators angibt oder eine oder mehrere Zusatzachsen eines redundanten Manipulators umfasst oder eine parametrisierte Funktion bezeichnet, deren Funktionswerte die Gelenkkoordinaten, insbesondere die Gelenkwinkeln, des Manipulators angeben, und wobei die Manipulatorsteuerung die Steuerbahn mit dem Manipulator abfährt, indem die Manipulatorsteuerung die Steuerbahn abtastet und die abgetasteten Punkte unter Berücksichtigung eines vorgegebenen Geschwindigkeits- oder Beschleunigungsprofils anfährt und die Bahngenerierungseinrichtung ein CAD-Werkzeug und einen Bahnoptimierer umfasst und Krümmungsinformationen Tangentenrichtungen ($t$(t$_i$)) und/oder- änderungen $\left(\dfrac{dt(t)}{dt}, \dfrac{d^2t(t)}{dt^2}, \ldots\right)$ der Bahn umfassen, wobei eine Tangentenrichtung und/oder -änderung der Bahn in einem lokalen Koordinatensystem eines Stützpunktes der Bahn definiert ist, die Steuerbahn unter Vorgabe einer maximalen Abweichung gegenüber der geplanten Bahn approximiert wird und eine Stützpunktanzahl der Steuerbahn gegenüber einer Stützpunktanzahl der geplanten Bahn reduziert wird.

2.    Verfahren nach Anspruch 1, **dadurch gekennzeichnet, dass** Krümmungsinformationen Polynomkoeffizienten ($a_{ij}$), insbesondere Polynomkoeffizienten erster oder höherer Ordnung umfassen.

3.    Verfahren nach einem der vorhergehenden Ansprüche, **dadurch gekennzeichnet, dass** Krümmungsinformationen Kontrollpunkte umfassen.

4.    Verfahren nach einem der vorhergehenden Ansprüche, **dadurch gekennzeichnet, dass** die geplante und/oder die Steuerbahn als Spline, insbesondere als kubischer oder höhergradiger Spline oder als B-Spline, und/oder als Bezier-Kurve vorgegeben bzw. bestimmt wird.

5.    Verfahren nach einem der vorhergehenden Ansprüche, **dadurch gekennzeichnet, dass** die Bahnkonvertierungseinrichtung Krümmungsinformationen der Steuerbahn auf Basis von Krümmungsinformationen der geplanten Bahn wahlweise und/oder abschnittsweise bestimmt.

6.    Verfahren nach einem der vorhergehenden Ansprüche, **dadurch gekennzeichnet, dass** der geplanten Bahn oder der Steuerbahn wenigstens ein Stützpunkt hinzugefügt wird, ohne dass die Form der Steuerbahn verändert wird.

7.    Vorrichtung zur Steuerung eines Manipulators, insbesondere eines Roboters (10), mit:

einer Bahngenerierungseinrichtung (1.1, 1.2, 1.3) zum Vorgeben einer geplanten Bahn ($z1$(t)) des Manipulators;
einer Bahnkonvertierungseinrichtung (2) zum automatischen Bestimmen einer Steuerbahn ($z2$(t)) auf Basis der geplanten Bahn; und

einer Manipulatorsteuerung (3) zum Abfahren der Steuerbahn mit dem Manipulator;
**dadurch gekennzeichnet, dass**
die Bahnkonvertierungseinrichtung zur Durchführung eines Verfahrens nach einem der vorhergehenden Ansprüche eingerichtet ist.

8. Computerprogramm, das ein Verfahren nach einem der Ansprüche 1 bis 6 ausführt, wenn es in einer Vorrichtung nach Anspruch 7 abläuft.

9. Computerprogrammprodukt mit Programmcode, der auf einem maschinenlesbaren Träger gespeichert ist und ein Computerprogramm nach Anspruch 8 umfasst.

**Claims**

1. A method of controlling a manipulator, in particular of a robot (10), comprising the steps of:

specifying a planned path ($z1(t)$) for the manipulator by means of a path generation device (1.1, 1.2, 1.3);
automatically determining a control path ($z2(t)$) on the basis of the planned path by means of a path conversion device (2); and
traversing the control path with the manipulator by means of a controller (3) of the manipulator,
**characterized in that**
the path conversion device (2) determines curvature information ($a_{ij}$; $t2(t_i)$) of the control path on the basis of curvature information ($a_{ij}$; $t1(t_i)$) of the planned path, wherein curvature information comprises first-order and/or

higher-order derivatives $(\frac{dz(t)}{dt}, \frac{d^2z(t)}{dt^2}, \ldots)$ of the path with respect to a path parameter (t), wherein the planned path and/or the control path indicates positions and/or orientations of the TCP of the manipulator or comprises one or more additional axes of a redundant manipulator or indicates a parameterized function, function values of said parameterized function indicating the joint coordinates, in particular the joint angles, of the manipulator, and wherein the control path is traversed with the manipulator by means of the controller of the manipulator by the controller of the manipulator sampling the control path and approaching the sampled points taking into account a predetermined speed or acceleration profile and the path generation device comprises a CAD tool and/or a path optimizer and curvature information comprises directions of tangents ($t(t_i)$) and/or changes

of tangents $(\frac{dt(t)}{dt}, \frac{d^2t(t)}{dt^2}, \ldots)$ of the path, wherein a direction and/or change of a tangent of the path is defined in a local coordinate system of a control point of the path, the control path is approximated with a maximum deviation with respect to the planned path being specified, and a number of control points of the control path is reduced with respect to a number of control points of the planned path.

2. The method according to claim 1, **characterized in that** the curvature information comprises polynomial coefficients ($a_{ij}$), in particular polynomial coefficients of first or higher order.

3. The method according to any one of the preceding claims, **characterized in that** the curvature information comprises reference points.

4. The method according to any one of the preceding claims, **characterized in that** the planned path and/or the control path is specified or determined as spline, in particular as third or higher degree spline or as B-spline, and/or as Bezier curve.

5. The method according to any one of the preceding claims, **characterized in that** the path conversion device determines curvature information of the control path, selectively and/or in sections, on the basis of curvature information of the planned path.

6. The method according to any one of the preceding claims, **characterized in that** at least one control point is added to the planned path or the control path without changing the shape of the control path.

7. An apparatus for controlling a manipulator, in particular of a robot (10), comprising:

   a path generating device (1.1, 1.2, 1.3) for specifying a planned path (*z1*(*t*)) of the manipulator;
   a path conversion device (2) for automatically determining a control path (*z2*(*t*)) on the basis of the planned path; and
   a controller for the manipulator (3) for traversing the control path with the manipulator;
   **characterized in that**
   the path conversion device is arranged to carry out a method according to any one of the preceding claims.

8. A computer program which carries out a method according to any one of claims 1 to 6 when it runs on an apparatus according to claim 7.

9. Computer program product with program code which is stored on a machine-readable medium and which comprises a computer program according to claim 8.

**Revendications**

1. Procédé de commande d'un manipulateur, en particulier d'un robot (10), avec les étapes de :

   prédéfinition d'une voie prévue (z1(t)) du manipulateur par un dispositif de génération de voie (1.1, 1.2, 1.3) ;
   détermination automatique d'une voie de commande (z2(t)) sur la base de la voie prévue par un dispositif de conversion de voie (2) ; et
   parcours de la voie de commande avec le manipulateur par une commande de manipulateur (3)
   **caractérisé en ce que**
   le dispositif de conversion de voie (2) détermine des informations de courbure ($a_{ij}$ ; t2($t_i$)) de la voie de commande sur la base d'informations de courbure ($a_{ij}$ ; t1($t_i$)) de la voie prévue, dans lequel les informations de courbure comprennent des dérivées de premier ordre et/ou d'ordre supérieur $(\frac{dz(t)}{dt}, \frac{d^2z(t)}{dt^2}, ...)$ de la voie d'après un paramètre de voie (t), dans lequel la voie prévue et/ou la voie de commande indique les positions et/ou les orientations du TCP du manipulateur ou comprend un ou plusieurs axes supplémentaires d'un manipulateur redondant ou désigne une fonction paramétrée dont les valeurs de fonction indiquent les coordonnées communes, en particulier les angles communs, du manipulateur, et dans lequel la commande du manipulateur parcourt la voie de commande avec le manipulateur, la commande de manipulateur parcourant la voie de commande et s'approchant des points parcourus selon une vitesse ou un profil d'accélération prédéterminés, le dispositif de génération de voie comprenant un outil de CAO et/ou un optimiseur de voie, et les informations de courbure comprenant des directions tangentes (t($t_i$)) et/ou modifications tangentes $(\frac{dt(t)}{dt}, \frac{d^2t(t)}{dt^2}, ...)$ de la voie, dans lequel une direction tangente et/ou modification tangente de la voie est définie dans un système de coordonnées local d'un point d'appui de la voie, la voie de commande est approximée par prédéfinition d'un écart maximum par rapport à la voie prévue et un nombre de points d'appui de la voie de commande est réduit par rapport à un nombre de points d'appui de la voie prévue.

2. Procédé selon la revendication 1, **caractérisé en ce que** les informations de courbure comprennent des coefficients de polynôme ($a_{ij}$), en particulier des coefficients de polynôme de premier ordre ou d'ordre supérieur.

3. Procédé selon l'une quelconque des revendications précédentes, **caractérisé en ce que** les informations de courbure comprennent des points de contrôle.

4. Procédé selon l'une quelconque des revendications précédentes, **caractérisé en ce que** la voie prévue et/ou la voie de commande est prédéfinie ou déterminée en tant que spline, en particulier en tant que spline cubique ou d'ordre supérieur ou en tant que spline B, et/ou en tant que courbe de Bézier.

5. Procédé selon l'une quelconque des revendications précédentes, **caractérisé en ce que** le dispositif de conversion de voie détermine des informations de courbure de la voie de commande sur la base d'informations de courbure de la voie prévue au choix et/ou par section.

6. Procédé selon l'une quelconque des revendications précédentes, **caractérisé en ce qu'**au moins un point d'appui est ajouté à la voie prévue ou à la voie de commande sans que la forme de la voie commande soit modifiée.

7. Dispositif de commande d'un manipulateur, en particulier d'un robot (10), avec :

un dispositif de génération de voie (1.1, 1.2, 1.3) pour la prédéfinition d'une voie prévue ($z1(t)$) du manipulateur ;
un dispositif de conversion de voie (2) pour la détermination automatique d'une voie de commande ($z2(t)$) sur la base de la voie prévue ; et
une commande de manipulateur (3) pour le parcours de la voie de commande avec le manipulateur ;
**caractérisé en ce que**
le dispositif de conversion de voie est aménagé pour la réalisation d'un procédé selon l'une quelconque des revendications précédentes.

8. Programme informatique qui exécute un procédé selon l'une quelconque des revendications 1 à 6, lorsqu'il se déroule dans un dispositif selon la revendication 7.

9. Produit de programme informatique avec code de programme, qui est enregistré sur un support lisible par machine et comprend un programme informatique selon la revendication 8.

# Fig. 1

# Fig. 2

$$z2(t) = a_{0i} + a_{1i}(t-t_i) + a_{2i}(t-t_i)^2 \ldots$$

$$\Delta q(t_1), \Delta q(t_2), \ldots$$

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1117020 B1
- US 20070030271 A1
- US 7295891 B2
- DE 102006022483 A1
- EP 0312544 B1
- DE 19618332 A1
- US 5726896 A

**In der Beschreibung aufgeführte Nicht-Patentliteratur**

- **CARL DE BOOR.** A practical guide to splines. Springer Verlag, 1978